# EUROPEAN PATENT SPECIFICATION

(11) **EP 4 329 468 B1**
(45) Date of publication and mention of the grant of the patent: **04.06.2025**
(21) Application number: 22724300.3
(22) Date of filing: 27.04.2022
(51) Int. Cl.: A01D 41/127, A01D 41/14

(54) **SYSTEMS AND METHODS FOR CONTROLLING SPEED AND DIRECTION OF A LATERAL CONVEYOR OF AN AGRICULTURAL HEADER**
VORRICHTUNG UND VERFAHREN ZUR KONTROLLE DER GESCHWINDIGKEIT UND RICHTUNG EINES LATERALEN FÖRDERERS EINES LANDWIRTSCHAFTLICHEN ERNTEVORSATZES
DISPOSITIF ET MÉTHODE DE COMMANDE DE LA VITESSE ET DIRECTION D'UN CONVOYEUR LATÉRAL D'UNE TÊTE DE RÉCOLTE AGRICOLE.

(30) Priority: 28.04.2021 US 202163180844 P
(43) Date of publication of application: 06.03.2024
(73) Proprietor: CNH Industrial Belgium NV, 8210 Zedelgem (BE)
(72) Inventor: HUNT, Cory Douglas, New Holland, Pennsylvania 17557 (US); MARTIN, Jethro, New Holland, Pennsylvania 17557 (US)
(74) Representative: CNH Industrial IP Department
(86) International application number: PCT/US2022/026502
(87) International publication number: WO 2022/232244

(56) References cited:
- US-A- 4 430 847
- US-A1- 2008 104 937
- US-A1- 2014 290 200
- US-B2- 10 216 156

## Description

### BACKGROUND

The present disclosure relates generally to an agricultural header and, more specifically, to controlling a speed and direction of a lateral conveyor of an agricultural header.

A harvester may be used to harvest crops, such as barley, beans, beets, carrots, corn, cotton, flax, oats, potatoes, rye, soybeans, wheat, or other plant crops. During operation of the harvester, the harvesting process may begin by removing a portion of a plant from a field using a header of the harvester. The header may cut the plant and transport the cut crops to a processing system of the harvester.

Certain headers include a cutter bar assembly configured to cut a portion of each crop (e.g., a stalk), thereby separating the cut crop from the soil. The cutter bar assembly may extend along a substantial portion of a width of the header at a forward end of the header. The header may also include one or more conveyors (e.g., belts) positioned behind the cutter bar assembly relative to a direction of travel of the harvester. The belt(s) are configured to transport the cut crops to an inlet (e.g., central inlet) of the processing system. For example, lateral belts laterally transport cut crops towards a centrally located infeed belt that transports the crop rearward into the harvester's feeder.

Certain headers may also include a reel assembly, which may include a reel having multiple fingers extending from a central framework. The central framework is driven to rotate, such that the fingers move in a circular pattern. The fingers are configured to engage the crops, thereby preparing the crops to be cut by the cutter bar assembly and/or urging the cut crops to move toward the belt(s).

Occasionally, during harvesting, a large slug of crop can feed onto the center section and lodge itself there or between the lateral belts and the infeed belt. Typically, to remove the slug of crop, an operator operates the harvester in a "de-slug" mode where all of the belts (lateral belts and infeed belt) are reversed in direction and the reel may also be reversed. However, this "de-slug" mode is time consuming since the entire threshing system of the harvester needs to be slowed to a stop before reversing directions.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

In certain embodiments, an agricultural system includes a header. The header includes a frame, a first lateral conveyor coupled to the frame, and a second lateral conveyor coupled to the frame. The first and second lateral conveyors are configured to laterally transport crop material towards a central crop-receiving aperture in a first direction. The header also includes actuators configured to adjust a speed and a direction of the first and second lateral conveyors. The agricultural system also includes a controller configured to receive an input from an input device that causes the controller to automatically link the speed and the direction of the first and second lateral conveyors to a vehicle speed and a vehicle direction of an agricultural vehicle that the header is coupled to. The controller is also configured to provide, when receiving the input, a control signal to the actuators that alters the speed and the direction of the first and second lateral conveyors in response to changes in the vehicle speed and the vehicle direction.

In certain embodiments, a method for operating lateral conveyors on a header of an agricultural vehicle includes receiving an input from an input device that causes a controller to automatically link a speed and a direction of both a first lateral conveyor and a second lateral conveyor to a vehicle speed and a vehicle direction of the agricultural vehicle. The first and second lateral conveyors are coupled to a frame of the header and are configured to laterally transport crop material towards a central crop-receiving aperture in a first direction. The method also includes providing, when receiving the input, a control signal to actuators coupled to the first and second lateral conveyors that alters the speed and the direction of the first and second lateral conveyors in response to changes in the vehicle speed and the vehicle direction.

In certain embodiments, a non-transitory computer readable medium includes executable instructions that, when executed by a processor, are configured to cause the processor to perform acts. The acts include receiving an input from an input device to automatically link a speed and a direction of both a first lateral conveyor and a second lateral conveyor to a vehicle speed and a vehicle direction of an agricultural vehicle. The first and second lateral conveyors are coupled to a frame of a header coupled to the agricultural vehicle and the first and second lateral conveyors are configured to laterally transport crop material towards a central crop-receiving aperture in the first direction. The acts also include providing, when receiving the input, a control signal to actuators coupled to the first and the second lateral conveyors that alters the speed and the direction of the first and second lateral conveyors in response to changes in the vehicle speed and the vehicle direction.

### DRAWINGS

These and other features, aspects, and advantages of the present invention will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective view of an embodiment of a header that may be employed within the agricultural system of FIG. 1, in accordance with an aspect of the present disclosure;
FIG. 3 is a block diagram of a control system that may be used to control laterals belts of the header of FIG. 2, in accordance with embodiments of the present disclosure;
FIG. 4 is a schematic diagram of a multi-function handle that be used as an input device, in accordance with embodiments of the present disclosure; and
FIG. 5 is a flow chart of an embodiment of a method for operating lateral belts that may be employed with the header of FIG. 2.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may cut agricultural crops within a field via a header. The header may also gather the cut agricultural crops into a processing system of the harvester for further processing. The processing system may include a threshing machine configured to thresh the agricultural crops, thereby separating the crops into certain desired agricultural materials, such as grain, and material other than grain (MOG). The desired agricultural materials may be sifted and then accumulated into a tank. When the tank fills to capacity, the materials may be collected from the tank. The MOG may then be discarded from the harvester (e.g., via a spreader).

The header may cut crops from the field that are encompassed within a width of the header. The header may include a cutter bar assembly that extends along at least a portion of the width of the header, and the cutter bar assembly may use blades to cut the crops. The cut crops may fall onto the header, and the cut crops may be gathered together, such as via conveyors (e.g., belt(s)) that run across the header. For example, lateral belts laterally transport cut crops towards a centrally located infeed belt that transports the crop rearward into the harvester's feeder. The gathered agricultural crops may then be transported into the processing system of the harvester.

Occasionally, during harvesting, a large slug of crop can feed onto the center section and lodge itself there or between the lateral belts and the infeed belt. Typically, to remove the slug of crop, an operator operates the harvester in a "de-slug" mode where all of the belts (lateral belts and infeed belt) are reversed in direction and the reel may also be reversed. However, this "de-slug" mode is time consuming since the entire threshing system of the harvester needs to be slowed to a stop before reversing directions.

Accordingly, the disclosed embodiments relate generally to systems and methods that enable a speed and a direction of the lateral conveyors (e.g., lateral belts) of a header to be automatically linked to a vehicle speed and a vehicle direction of an agricultural vehicle (e.g., harvester) having the header. Thus, the speed and the direction of the lateral belts will alter in response to changes in the vehicle speed and the vehicle direction when automatically linked. For example, in order to "de-slug" a slug of crop from the center section, an input may be received from an input device (e.g., depression of and holding of a button such as a shift button on a multi-function handle in an operator station of the agricultural vehicle) that causes the automatic linkage. During the automatic linkage, if the agricultural vehicle reverses, the lateral belts reverse direction; if the agricultural vehicle stops, the lateral belts stop; if the agricultural vehicle changes speed, the lateral belts change speed. Once the crop is dislodged, the input from the input device may cease (e.g., pressing of the button stopped) and the operator can return the agricultural vehicle to normal operation (where both the speed and the direction of the laterals belts will not be automatically linked to both the vehicle speed and the vehicle direction). The disclosed embodiments enable an operator to perform the automatic linkage function while simultaneously slowing the agricultural vehicle to a stop to enable the reversal of the lateral belts.

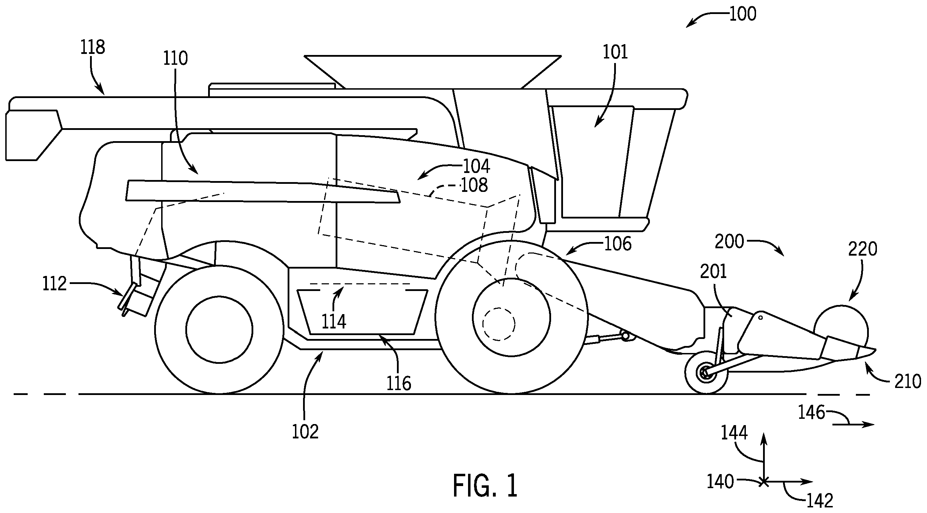

With the foregoing in mind, FIG. 1 is a side view of an embodiment of an agricultural system 100, which may be an agricultural vehicle such as a harvester. Operations of the agricultural system 100 may be operated by an operator in an operator cabin. The agricultural system 100 includes a chassis 102 configured to support a header 200 and an agricultural crop processing system 104. As described in greater detail below, the header 200 is configured to cut crops and to transport the cut crops toward an inlet 106 of the agricultural crop processing system 104 for further processing of the cut crops. The agricultural crop processing system 104 receives the cut crops from the header 200 and separates desired crop material from crop residue. For example, the agricultural crop processing system 104 may include a thresher 108 having a cylindrical threshing rotor that transports the crops in a helical flow path through the agricultural system 100. In addition to transporting the crops, the thresher 108 may separate certain desired crop material (e.g., grain) from the crop residue, such as husks and pods, and may enable the desired crop material to flow into a cleaning system 114 (such as sieves) located beneath the thresher 108. The cleaning system 114 may remove debris from the desired crop material and transport the desired crop material to a storage tank 116 within the agricultural system 100. When the storage tank 116 is full, a tractor with a trailer on the back may pull alongside the agricultural system 100. The desired crop material collected in the storage tank 116 may be carried up by an elevator and dumped out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. To facilitate discussion, the agricultural system 100 and/or its components may be described with reference to a lateral axis or direction 140, a longitudinal axis or direction 142, and a vertical axis or direction 144. The agricultural system 100 and/or its components may also be described with reference to a direction of travel 146.

As discussed in detail below, the header 200 includes a cutter bar assembly 210 configured to cut the crops within the field. The header 200 also includes a reel assembly 220 configured to engage the crops to prepare the crops to be cut by the cutter bar assembly 210 and/or to urge crops cut by the cutter bar assembly 210 onto a conveyor system that directs the cut crops toward the inlet 106 of the agricultural crop processing system 104. The reel assembly 220 includes a reel having multiple fingers extending from a central framework. The central framework is driven to rotate such that the fingers engage the crops and urge the crops toward the cutter bar assembly 210 and the conveyor system. Additionally, the reel may be supported by multiple arms (e.g., reel arms) that are coupled to a frame 201 of the header 200. Each of the arms may be coupled to the frame 201 via a respective pivot joint. For example, one pivot joint is configured to enable a first arm of the multiple arms to pivot (e.g., about the lateral axis 140) relative to the frame 201, and another pivot joint is configured to enable a second arm of the multiple arms to pivot (e.g., about the lateral axis 140) relative to the frame 201.

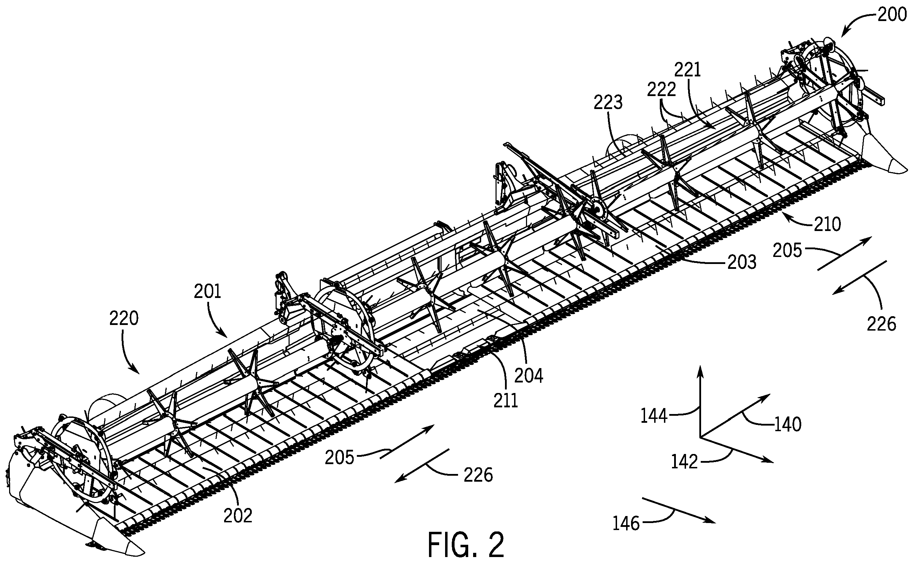

FIG. 2 is a perspective view of an embodiment of the header 200 that may be employed within the agricultural system 100 of FIG. 1. In the illustrated embodiment, the header 200 includes the cutter bar assembly 210 configured to cut a portion of each crop (e.g., a stalk), thereby separating the crop from the soil. The cutter bar assembly 210 is positioned at a forward end of the header 200 relative to the longitudinal axis 142 of the header 200. As illustrated, the cutter bar assembly 210 extends along a substantial portion of the width of the header 200 (e.g., along the lateral axis 140). The cutter bar assembly 210 includes a blade support, a stationary guard assembly, and a moving blade assembly. The moving blade assembly is fixed to the blade support (e.g., above the blade support along the vertical axis 144 of the header 200), and the blade support/moving blade assembly is driven to oscillate relative to the stationary guard assembly. In the illustrated embodiment, the blade support/moving blade assembly is driven to oscillate by a driving mechanism 211 positioned at a center of the header 200. However, in other embodiments, the blade support/moving blade assembly may be driven by another suitable mechanism (e.g., located at any suitable position on the header 200). As the agricultural system 100 is driven through the field, the cutter bar assembly 210 engages crops within the field, and the moving blade assembly cuts the crops (e.g., the stalks of the crops) in response to engagement of the cutter bar assembly 210 with the crops.

In the illustrated embodiment, the header 200 includes a first conveyor section 202 (e.g., lateral belt or lateral conveyor belt) on a first lateral side of the header 200 and a second conveyor section 203 (e.g., lateral belt or lateral conveyor belt) on a second lateral side of the header 200 opposite the first lateral side. The conveyor sections 202 and 203 are coupled to the frame 201 of the header 200. The conveyor sections 202, 203 may be separate from one another. For instance, the first conveyor section 202 may extend along a portion of a width of the header 200 and the second conveyor section 203 may extend along another portion of the width of the header 200. Each conveyor section 202, 203 is driven to rotate by a suitable drive mechanism (e.g., actuator), such as an electric motor or a hydraulic motor. The first conveyor section 202 and the second conveyor section 203 are driven such that a top surface of each conveyor section 202, 203 moves laterally inward (e.g., in a direction indicated by arrows 205) to a center conveyor section 204 (e.g., infeed belt or infeed conveyor belt) positioned between the first conveyor section 202 and the second conveyor section 203 along the lateral axis 140. The center conveyor section 204 is coupled to the frame 201 of the header 200. The center conveyor section 204 may also be driven to rotate by a suitable drive mechanism (e.g., actuator), such as an electric motor or a hydraulic motor. The center conveyor section 204 is driven such that the top surface of the center conveyor section 204 moves rearwardly relative to the direction of travel 146 toward the inlet. As a result, the conveyor sections 202, 203, 204 transport the cut crops through the inlet to the agricultural crop processing system for further processing of the cut crops. Although the illustrated header 200 includes two conveyor sections 202, 203 configured to direct crops laterally toward the center conveyor section 204, there may be any suitable number of conveyor sections in additional or alternative embodiments directing the crops toward the center conveyor section.

In the illustrated embodiment, the crops cut by the cutter bar assembly 210 are directed toward the conveyor sections 202, 203 at least in part by the reel assembly 220, thereby substantially reducing the possibility of the cut crops falling onto the surface of the field. The reel assembly 220 includes a reel 221 having multiple fingers or tines 222 extending from a central framework 223. The central framework 223 is driven to rotate such that the fingers 222 move (e.g., in a circular pattern). The fingers 222 are configured to engage the crops and urge the cut crops toward the conveyor sections 202, 203 to facilitate transportation of the cut crops to the agricultural crop processing system.

In certain embodiments, during normal operations of an agricultural vehicle, a speed of the lateral belts 202, 203 and/or the reel 201 may be linked to a ground speed of the agricultural vehicle. However, even if the vehicle is slowed to a stop, the lateral belts 202, 203 and the reel 201 maintain a minimum set threshold speed that keeps the laterals belts 202, 203 and the reel 201 moving. This keeps the reel 201 and the lateral belts 202, 203 from stopping with the agricultural vehicle, while still tracking to the optimal speed during harvesting operations.

As discussed below, in order to dislodge crop near the center section, a speed and a direction of the laterals belts 202, 203 (not the infeed belt 204) of the header 200 may be automatically linked to a vehicle speed and a vehicle direction of an agricultural vehicle having the header 200. Thus, the speed and the direction of the lateral belts 201, 202 will alter in response to changes in the vehicle speed and the vehicle direction when automatically linked. For example, in order to "de-slug" a slug of crop from the center section, an input may be received from an input device (e.g., depression of and holding of a button such as a shift button on a multi-function handle in an operator cabin (e.g., operator cabin 101 in FIG. 1) of the agricultural vehicle) that causes the automatic linkage. During the automatic linkage, if the agricultural vehicle reverses, the lateral belts 202, 203 reverse direction (as indicated by arrows 226); if the agricultural vehicle stops, the lateral belts 202, 203 stop; if the agricultural vehicle changes speed, the lateral belts 202, 203 change speed. Once the crop is dislodged, the input from the input device may cease (e.g., pressing of the button stopped) and the operator can return the agricultural vehicle to normal operation (where both the speed and the direction of the laterals belts 202, 203 will not be automatically linked to both the vehicle speed and the vehicle direction). The disclosed embodiments enables an operator to perform the automatic linkage function while simultaneously slowing the agricultural vehicle to a stop to enable the reversal of the lateral belts 202, 203.

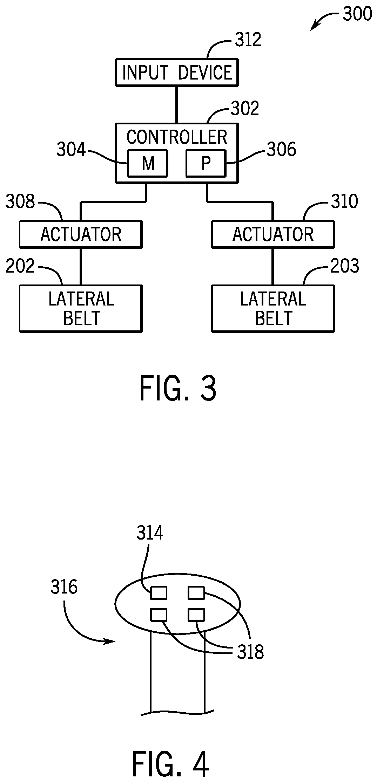

FIG. 3 is a diagram of an embodiment of a control system 300 (e.g., electronic control system) configured to control the laterals belts 202, 203 of the header 200 of FIG. 2. In the illustrated embodiment, the control system 300 includes a controller 302 having a memory 304 and a processor 306. The memory 304 may be any type of non-transitory machine readable medium for storing data and executable instructions, such as random-access memory, read-only memory, rewritable flash memory, hard drives, optical discs, and the like. The processor 306 may execute instructions stored on the memory 304. For example, the memory 304 may contain machine readable code, such as instructions, that may be executed by the processor 306.

The controller 302 is configured to control a direction and a speed of the laterals belts 202, 203 via control signals sent to actuators 308, 310 coupled to the laterals belts 202, 203, respectively. In certain embodiments, during normal operations, the controller 302 may operate the laterals belts 202, 203 under an automatic belt speed mode. In the automatic belt speed mode, the speed of the lateral belts 202, 203 is linked to the ground speed of the agricultural vehicle. However, during the automatic belt speed mode, if the agricultural vehicle is slowed to a stop, the controller 302 will keep the lateral belts moving at a set minimum threshold speed. The set minimum threshold speed keeps the lateral belts 202, 203 from stopping with the agricultural vehicle, while still tracking to the optimal speed during harvest operations.

In certain embodiments, in response to a received input, the controller 302 automatically links the speed and the direction of the laterals belts 202, 203 (but not the infeed belt) of the header 200 to a vehicle speed and a vehicle direction of an agricultural vehicle having the header 200. Thus, the speed and the direction of the lateral belts 201, 202 will alter in response to changes in the vehicle speed and the vehicle direction when automatically linked. For example, in order to "de-slug" a slug of crop from the center section, an input may be received that causes the automatic linkage. During the automatic linkage, if the agricultural vehicle reverses, the lateral belts 202, 203 reverse direction (e.g., away from the center section); if the agricultural vehicle stops, the lateral belts 202, 203 stop; if the agricultural vehicle changes speed, the lateral belts 202, 203 change speed. Once the crop is dislodged, the received input may cease and the operator can return the agricultural vehicle to normal operation (where both the speed and the direction of the laterals belts 202, 203 will not be automatically linked to both the vehicle speed and the vehicle direction).

In some embodiments, an operator may provide an input (e.g., via an input device 312 coupled to the controller 302) that causes the automatic linkage of the speed and the direction of the laterals belts 202, 203 (but not the infeed belt) of the header 200 to the vehicle speed and the vehicle direction of an agricultural vehicle having the header 200. For example, as depicted in FIG. 4, the input device 312 may be a button 314 (e.g., shift button) located on a multi-function handle 316 (having multiple buttons 318 for other functions) located in a cabin (e.g., on the right-hand side of the operator) of the agricultural vehicle. During normal operation, the button 314 does not perform any function unless pressed in combination with another function button (e.g., one of the buttons 318). When the operator wants to dislodge crop from the central section, the operator presses and holds the button to provide the input signal to the controller 302 that causes the automatic linkage of the speed and the direction of the laterals belts 202, 203 to the vehicle speed and the vehicle direction of an agricultural vehicle. As long as the button 314 is being pressed, the input signal will be provided to the controller 302. The presence of the button 314 on the multi-function handle 316 enables the operator to activate the automatic linkage function while simultaneously slowing the agricultural vehicle to a stop to enable the reversal of the lateral belts 202, 203. In addition, the operator may control certain functions (controlling the vehicle speed and direction) of the agricultural vehicle while enabling the automatic linkage function. Once the crop is dislodged, the operator ceases pressing the button 314 and, thus, ceases providing the input signal to the controller 302, which causes the automatic linkage to cease. In certain embodiments, the button 314 may be located on a different handle or multi-function handle (e.g., located on the lefthand side of the operator). In certain embodiments, the button 314 may not be associated with any handle but located somewhere else within the cabin. In certain embodiments, the button 314 may only need to be pressed (and not held) to activate the automatic linkage function and then pressed again to deactivate the automatic linkage function. In certain embodiments, the input device may be a switch (e.g., toggle switch), an icon on a touch screen, or some other input device.

Returning to FIG. 3, the actuators 308, 310 for the lateral belts 202, 203 may be any suitable drive mechanism. In certain embodiments, the drive mechanism may be an electric motor. In other embodiments, the drive mechanism may be a hydraulic motor. In certain embodiments, the lateral belts 202, 203 may be hydraulically controlled. For example, a proportional flow control valve may be utilized in series with a directional control valve. To change belt direction, the following may occur: 1) reduce belt speed to zero utilizing the flow control valve, 2) change direction using the directional control valve, and 3) increase belt speed in the opposite direction (e.g., direction 226 in FIG. 2). The process may be performed in reverse to return to a forward speed (i.e., moving the belt in direction 205 in FIG. 2).

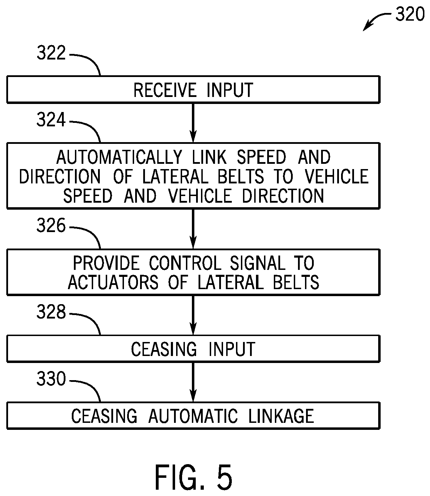

FIG. 5 is a flow chart of an embodiment of a method 320 for operating the lateral belts 202, 203 that may be employed with the header 200 of FIG. 2. It should be noted that although the method 320 is described below in a particular order, it should be understood that the method 320 may be performed in any suitable order. The method 320 may be performed by the controller 302 in FIG. 3 or another suitable computing device.

The method 320 includes receiving an input from an input device (e.g., button 314 on the multi-function handle 316 in FIG. 3) (block 322). The method 320 also includes (simultaneous with and in response to receiving the input) automatically linking a speed and a direction of the lateral belts (e.g., lateral belts 202, 203 in FIGS. 2 and 3) to a vehicle speed and a vehicle direction of an agricultural vehicle having a header with the lateral belts (block 324). In certain embodiments, the automatic linkage continues until the receiving of the input ceases (e.g., until the button 314 on the multi-function handle 316 in FIG. 3 is no longer pressed and held). The method 320 further includes providing a control signal, when receiving the input, to the actuators (e.g., actuators 308, 310 in FIG. 3) of the lateral belts to alter the speed and direction of the lateral belts in response to changes in the vehicle speed and the vehicle direction (block 326). For example, during the automatic linkage, if the agricultural vehicle reverses, the lateral belts reverse direction (e.g., direction 226 in FIG. 2); if the agricultural vehicle stops, the lateral belts stop; if the agricultural vehicle changes speed (e.g., increases or decreases), the lateral belts change speed (e.g., increases or decreases). Blocks 322-326 of the method 320 may be utilized to dislodge crop form a center portion of the header (e.g., at the inlet feed belt or between the inlet feed belt and the lateral belts).

The method 320 include, once the crop is dislodged, ceasing the input from the input device (e.g., ceasing the pressing and holding of the button 314 in FIG. 4) (block 328). The method 320 further includes (simultaneous with and in response to no longer receiving the input) ceasing the automatic linkage between the speed and the direction of the lateral belts to the vehicle speed and the vehicle direction of the agricultural vehicle (block 330). The operator can return the agricultural vehicle to normal operation (where both the speed and the direction of the laterals belts will not be automatically linked to both the vehicle speed and the vehicle direction). In certain embodiments, during normal operations of the agricultural vehicle, the speed of the lateral belts may be linked to a ground speed of the agricultural vehicle but, even if the vehicle is slowed to a stop, the lateral belts maintain a minimum set threshold speed that keeps the laterals belts moving. This keeps the lateral belts from stopping with the agricultural vehicle, while still tracking to the optimal speed during harvesting operations.

It should be noted that the techniques disclosed above may apply to other lateral conveyors for laterally transporting crop material. For example, a rotational direction (e.g., affecting the direction of travel of the crop material) and speed of one or more augers (lateral conveyors) may be automatically linked to the vehicle speed and the vehicle direction as described above.

While only certain features have been illustrated and described herein, many modifications and changes will occur to those skilled in the art.

## Claims

1. An agricultural system (100) comprising:
- an agricultural vehicle;
- a header (200), coupled to the agricultural vehicle and comprising:
- a frame (201);
- a first lateral conveyor (202) coupled to the frame (201);
- a second lateral conveyor (203) coupled to the frame (201), wherein the first and second lateral conveyors (202, 203) are configured to laterally transport crop material towards a central crop-receiving aperture in a first direction; and
- actuators (308, 310) configured to adjust a speed and a direction of the first and second lateral conveyors (202, 203); and
- a controller (302), the agricultural system (100) being **characterized in that** the controller (302) is configured to:
- receive an input from an input device (312) that causes the controller (302) to automatically link the speed and the direction of the first and second lateral conveyors (202, 203) to a vehicle speed and a vehicle direction of the agricultural vehicle; and
- provide, when receiving the input, a control signal to the actuators (308, 310) that alters the speed and the direction of the first and second lateral conveyors (202, 203) in response to changes in the vehicle speed and the vehicle direction.

2. The agricultural system (100) of claim 1, wherein, when receiving the input, the control signal causes the first and second lateral conveyors (202, 203) to stop moving when the agricultural vehicle stops.

3. The agricultural system (100) of claim 1, wherein, when receiving the input, the control signal causes the first and second lateral conveyors (202, 203) to move in a second direction opposite the first direction when the agricultural vehicle moves in a reverse direction.

4. The agricultural system (100) of claim 3, wherein, when receiving the input, the control signal causes the speed of the first and second lateral conveyors (202, 203) to alter as the vehicle speed of the agricultural vehicle alters in the reverse direction.

5. The agricultural system (100) of claim 1, wherein, in the absence of the controller receiving the input or when the controller (302) ceases receiving the input, the direction of the first and second lateral conveyors (202, 203) is not linked to changes in the vehicle direction.

6. The agricultural system (100) of claim 1, wherein, in the absence of the controller (302) receiving the input or when the controller (302) ceases receiving the input, the speed of the first and second lateral conveyors (202, 203) is linked to changes in the vehicle speed until the speed of the first and second lateral conveyors (202, 203) reaches a minimum threshold speed.

7. The agricultural system (100) of claim 6, wherein, in the absence of the controller (302) receiving the input or when the controller (302) ceases receiving the input, the speed of the first and second lateral conveyors (202, 203) is maintained at the minimum threshold speed when the agricultural vehicle is stopped.

8. The agricultural system (100) of claim 6, wherein, when receiving the input, the speed of the first and second lateral conveyors (202, 203) is not subject to the minimum threshold speed.

9. The agricultural system (100) of claim 1, wherein the input device (312) is located within a cabin (101) of the agricultural vehicle.

10. The agricultural system (100) of claim 9, wherein the input device (312) comprises a button (314) on a multi-function handle (316) that controls the vehicle speed and the vehicle direction.

11. The agricultural system (100) of claim 10, wherein, while the button (314) is depressed, the speed and the direction of the first and second lateral conveyors (202, 203) remains automatically linked to the vehicle speed and the vehicle direction of the agricultural vehicle.

12. A method for operating lateral conveyors (202, 203) on a header (200) of an agricultural vehicle (100), the method being **characterized in that** it comprises:
receiving an input from an input device (312) that causes a controller (302) to automatically link a speed and a direction of both a first lateral conveyor (202) and a second lateral conveyor (203) to a vehicle speed and a vehicle direction of the agricultural vehicle (100), wherein the first and second lateral conveyors (202, 203) are coupled to a frame (201) of the header (200) and are configured to laterally transport crop material towards a central crop-receiving aperture in a first direction; and
providing, when receiving the input, a control signal to actuators (308, 310) coupled to the first and second lateral conveyors (202, 203) that alters the speed and the direction of the first and second lateral conveyors (202, 203) in response to changes in the vehicle speed and the vehicle direction.

13. The method of claim 12, wherein providing, when receiving the input, the control signal causes the first and second lateral conveyors (202, 203) to stop moving when the agricultural vehicle (100) stops.

14. The method of claim 12, wherein providing, when receiving the input, the control signal alters the direction of the first and second lateral conveyors (202, 203) to a second direction opposite the first direction when the agricultural vehicle (100) moves in a reverse direction.

15. The method of claim 12, comprising ceasing the input causes the direction of the first and second lateral conveyors (202, 203) to not be linked to changes in the vehicle direction.

## Patentansprüche

1. Landwirtschaftliches System (100) umfassend:
ein landwirtschaftliches Fahrzeug;
einen Erntevorsatz (200), der mit dem landwirtschaftlichen Fahrzeug verbunden ist und umfasst:
einen Rahmen (201);
ein erstes seitliches Förderband (202), das mit dem Rahmen (201) verbunden ist;
ein zweites seitliches Förderband (203), das mit dem Rahmen (201) verbunden ist, wobei das erste und das zweite seitliche Förderband (202, 203) dazu eingerichtet sind, Erntegut in einer ersten Richtung seitlich zu einer zentralen Erntegut aufnehmenden Öffnung zu transportieren; und
Aktuatoren (308, 310), die dazu eingerichtet sind, eine Geschwindigkeit und eine Richtung des ersten und zweiten seitlichen Förderbands (202, 203) anzupassen; und
eine Steuervorrichtung (302), wobei das landwirtschaftliche System (100) **dadurch gekennzeichnet ist, dass** die Steuervorrichtung (302) dazu eingerichtet ist:
ein Eingangssignal von einem Eingabegerät (312) zu empfangen, das die Steuervorrichtung (302) dazu veranlasst, die Geschwindigkeit und die Richtung des ersten und zweiten seitlichen Förderbands (202, 203) automatisch mit der Fahrzeuggeschwindigkeit und der Fahrtrichtung des landwirtschaftlichen Fahrzeugs zu verknüpfen; und
bei Empfang des Eingangssignals ein Steuersignal an die Aktuatoren (308, 310) bereitzustellen, das die Geschwindigkeit und die Richtung des ersten und zweiten seitlichen Förderbands (202, 203) in Reaktion auf Änderungen der Fahrzeuggeschwindigkeit und der Fahrtrichtung verändert.

2. Landwirtschaftliches System (100) nach Anspruch 1, wobei das Steuersignal, wenn das Eingangssignal empfangen wird, das erste und zweite seitliche Förderband (202, 203) dazu veranlasst, anzuhalten, wenn das landwirtschaftliche Fahrzeug anhält.

3. Landwirtschaftliches System (100) nach Anspruch 1, wobei das Steuersignal, wenn das Eingangssignal empfangen wird, das erste und zweite seitliche Förderband (202, 203) dazu veranlasst, sich in eine zweite Richtung entgegengesetzt zur ersten Richtung zu bewegen, wenn das landwirtschaftliche Fahrzeug sich rückwärts bewegt.

4. Landwirtschaftliches System (100) nach Anspruch 3, wobei das Steuersignal, wenn das Eingangssignal empfangen wird, die Geschwindigkeit des ersten und zweiten seitlichen Förderbands (202, 203) ändert, wenn sich die Fahrzeuggeschwindigkeit des landwirtschaftlichen Fahrzeugs in der Rückwärtsrichtung ändert.

5. Landwirtschaftliches System (100) nach Anspruch 1, wobei, wenn die Steuervorrichtung (302) das Eingangssignal nicht empfängt oder die Steuervorrichtung (302) aufhört, das Eingangssignal zu empfangen, die Richtung des ersten und zweiten seitlichen Förderbands (202, 203) nicht mit Änderungen der Fahrtrichtung des Fahrzeugs verknüpft ist.

6. Landwirtschaftliches System (100) nach Anspruch 1, wobei, wenn die Steuervorrichtung (302) das Eingangssignal nicht empfängt oder die Steuervorrichtung (302) aufhört, das Eingangssignal zu empfangen, die Geschwindigkeit des ersten und zweiten seitlichen Förderbands (202, 203) mit Änderungen der Fahrzeuggeschwindigkeit verknüpft ist, bis die Geschwindigkeit des ersten und zweiten seitlichen Förderbands (202, 203) eine minimale Grenzwert-Geschwindigkeit erreicht.

7. Landwirtschaftliches System (100) nach Anspruch 6, wobei, wenn die Steuervorrichtung (302) das Eingangssignal nicht empfängt oder die Steuervorrichtung (302) aufhört, das Eingangssignal zu empfangen, die Geschwindigkeit des ersten und zweiten seitlichen Förderbands (202, 203) bei der minimalen Grenzwert-Geschwindigkeit gehalten wird, wenn das landwirtschaftliche Fahrzeug angehalten wird.

8. Landwirtschaftliches System (100) nach Anspruch 6, wobei, wenn das Eingangssignal empfangen wird, die Geschwindigkeit des ersten und zweiten seitlichen Förderbands (202, 203) nicht minimalen Grenzwert-Geschwindigkeit unterliegt.

9. Landwirtschaftliches System (100) nach Anspruch 1, wobei das Eingabegerät (312) innerhalb eines Führerhauses (101) des landwirtschaftlichen Fahrzeugs angeordnet ist.

10. Landwirtschaftliches System (100) nach Anspruch 9, wobei das Eingabegerät (312) einen Knopf (314) an einem Multifunktionsgriff (316) umfasst, der die Fahrzeuggeschwindigkeit und die Fahrtrichtung des Fahrzeugs steuert.

11. Landwirtschaftliches System (100) nach Anspruch 10, wobei, solange der Knopf (314) gedrückt ist, die Geschwindigkeit und die Richtung des ersten und zweiten seitlichen Förderbands (202, 203) automatisch mit der Fahrzeuggeschwindigkeit und der Fahrtrichtung des landwirtschaftlichen Fahrzeugs verknüpft bleiben.

12. Verfahren zum Betreiben von seitlichen Förderbändern (202, 203) an einem Erntevorsatz (200) eines landwirtschaftlichen Fahrzeugs (100), wobei das Verfahren **dadurch gekennzeichnet ist, dass** es umfasst:
Empfangen eines Eingangssignals von einem Eingabegerät (312), das eine Steuervorrichtung (302) dazu veranlasst, eine Geschwindigkeit und eine Richtung sowohl des ersten seitlichen Förderbands (202) als auch des zweiten seitlichen Förderbands (203) automatisch mit der Fahrzeuggeschwindigkeit und der Fahrtrichtung des landwirtschaftlichen Fahrzeugs (100) zu verknüpfen, wobei das erste und das zweite seitliche Förderband (202, 203) mit einem Rahmen (201) des Erntevorsatzes (200) verbunden sind und dazu eingerichtet sind, Erntegut in einer ersten Richtung seitlich zu einer zentralen Erntegut aufnehmenden Öffnung zu transportieren; und
wenn das Eingangssignal empfangen wird, Bereitstellen eines Steuersignals an Aktuatoren (308, 310), die mit dem ersten und zweiten seitlichen Förderband (202, 203) verbunden sind, das die Geschwindigkeit und die Richtung des ersten und zweiten seitlichen Förderbands (202, 203) in Reaktion auf Änderungen der Fahrzeuggeschwindigkeit und der Fahrtrichtung verändert.

13. Verfahren nach Anspruch 12, wobei das Bereitstellen des Steuersignals, wenn das Eingangssignal empfangen wird, dazu führt, dass das erste und zweite seitliche Förderband (202, 203) anhalten, wenn das landwirtschaftliche Fahrzeug (100) anhält.

14. Verfahren nach Anspruch 12, wobei das Bereitstellen des Steuersignals, wenn das Eingangssignal empfangen wird, die Richtung des ersten und zweiten seitlichen Förderbands (202, 203) zu einer zweiten Richtung ändert, die der ersten Richtung entgegengesetzt ist, wenn das landwirtschaftliche Fahrzeug (100) sich rückwärts bewegt.

15. Verfahren nach Anspruch 12, wobei das Beenden des Eingangssignals dazu führt, dass die Richtung des ersten und zweiten seitlichen Förderbands (202, 203) nicht mit Änderungen der Fahrtrichtung des Fahrzeugs verknüpft sind.

## Revendications

1. Un système agricole (100) comprenant :
- un véhicule agricole ;
- un organe de coupe (200), couplé au véhicule agricole et comprenant :
- un châssis (201) ;
- un premier convoyeur latéral (202) couplé au châssis (201) ;
- un second convoyeur latéral (203) couplé au châssis (201), dans lequel le premier et le second convoyeur latéral (202, 203) sont configurés pour transporter latéralement le matériau récolté vers une ouverture centrale de réception de récolte dans une première direction ; et
des actionneurs (308, 310) configurés pour ajuster une vitesse et une direction du premier et du second convoyeur latéral (202, 203) ; et
un contrôleur (302), le système agricole (100) étant **caractérisé en ce que** le contrôleur (302) est configuré pour :
recevoir une entrée d'un dispositif d'entrée (312) qui amène le contrôleur (302) à relier automatiquement la vitesse et la direction du premier et du second convoyeur latéral (202, 203) à la vitesse de véhicule et à la direction de véhicule du véhicule agricole ; et
fournir, lors de la réception de l'entrée, un signal de commande aux actionneurs (308, 310) qui modifie la vitesse et la direction du premier et du second convoyeur latéral (202, 203) en réponse aux changements de vitesse de véhicule et de direction de véhicule.

2. Le système agricole (100) selon la revendication 1, dans lequel, lors de la réception de l'entrée, le signal de commande amène le premier et le second convoyeur latéral (202, 203) à cesser de se déplacer quand le véhicule agricole s'arrête.

3. Le système agricole (100) selon la revendication 1, dans lequel, lors de la réception de l'entrée, le signal de commande amène le premier et le second convoyeur latéral (202, 203) à se déplacer dans une seconde direction opposée à la première direction lorsque le véhicule agricole se déplace en sens inverse.

4. Le système agricole (100) selon la revendication 3, dans lequel, lors de la réception de l'entrée, le signal de commande entraîne le changement de vitesse du premier et du second convoyeur latéral (202, 203) tandis que la vitesse de véhicule du véhicule agricole change dans la direction inverse.

5. Le système agricole (100) selon la revendication 1, dans lequel, en l'absence de réception de l'entrée par le contrôleur ou lorsque le contrôleur (302) cesse de recevoir l'entrée, la direction du premier et du second convoyeur latéral (202, 203) n'est pas reliée aux changements de direction du véhicule.

6. Le système agricole (100) selon la revendication 1, dans lequel, en l'absence de réception de l'entrée par le contrôleur (302) ou lorsque le contrôleur (302) cesse de recevoir l'entrée, la vitesse du premier et du second convoyeur latéral (202, 203) est reliée aux changements de vitesse de véhicule jusqu'à ce que la vitesse du premier et du second convoyeur latéral (202, 203) atteigne une vitesse seuil minimale.

7. Le système agricole (100) selon la revendication 6, dans lequel, en l'absence de réception de l'entrée par le contrôleur (302) ou lorsque le contrôleur (302) cesse de recevoir l'entrée, la vitesse du premier et du second convoyeur latéral (202, 203) est maintenue à la vitesse seuil minimale quand le véhicule agricole est arrêté.

8. Le système agricole (100) selon la revendication 6, dans lequel, lors de la réception de l'entrée, la vitesse du premier et du second convoyeur latéral (202, 203) n'est pas soumise à la vitesse seuil minimale.

9. Le système agricole (100) selon la revendication 1, dans lequel le dispositif d'entrée (312) est situé dans une cabine (101) du véhicule agricole.

10. Le système agricole (100) selon la revendication 9, dans lequel le dispositif d'entrée (312) comprend un bouton (314) sur une poignée multifonction (316) qui contrôle la vitesse de véhicule et la direction de véhicule.

11. Le système agricole (100) selon la revendication 10, dans lequel, lorsque le bouton (314) est enfoncé, la vitesse et la direction du premier et du second convoyeur latéral (202, 203) restent automatiquement reliées à la vitesse de véhicule et à la direction de véhicule du véhicule agricole.

12. Un procédé de fonctionnement des convoyeurs latéraux (202, 203) sur un organe de coupe (200) d'un véhicule agricole (100), le procédé étant **caractérisé en ce qu'**il comprend :
la réception d'une entrée en provenance d'un dispositif d'entrée (312) qui amène un contrôleur (302) à relier automatiquement une vitesse et une direction à la fois d'un premier convoyeur latéral (202) et d'un second convoyeur latéral (203) à une vitesse de véhicule et une direction de véhicule du véhicule agricole (100), dans lequel le premier convoyeur latéral et le second convoyeur latéral (202, 203) sont couplés à un châssis (201) de l'organe de coupe (200) et sont configurés pour transporter latéralement le matériau récolté vers une ouverture centrale de réception de récolte dans une première direction ; et
la fourniture, lors de la réception de l'entrée, d'un signal de commande aux actionneurs (308, 310) couplés au premier et au second convoyeur latéral (202, 203) qui modifie la vitesse et la direction du premier et du second convoyeur latéral (202, 203) en réponse aux changements de vitesse de véhicule et de direction de véhicule.

13. Le procédé selon la revendication 12, dans lequel la fourniture, lors de la réception de l'entrée, du signal de commande amène le premier et le second convoyeur latéral (202, 203) à cesser de se déplacer quand le véhicule agricole (100) s'arrête.

14. Le procédé selon la revendication 12, dans lequel la fourniture, lors de la réception de l'entrée, du signal de commande modifie la direction du premier et du second convoyeur latéral (202, 203) dans une seconde direction opposée à la première direction quand le véhicule agricole (100) se déplace dans une direction inverse.

15. Le procédé selon la revendication 12, comprenant l'arrêt de l'entrée, fait en sorte que la direction du premier et du second convoyeur latéral (202, 203) ne soit pas reliée aux changements de direction de véhicule.
